(19) Europäisches Patentamt
European Patent Office
Office européen des brevets

(11) **EP 2 180 751 A2**

(12) **EUROPEAN PATENT APPLICATION**

(43) Date of publication:
**28.04.2010 Bulletin 2010/17**

(51) Int Cl.:
*H04W 74/08* (2009.01)

(21) Application number: **09173779.1**

(22) Date of filing: **22.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **23.10.2008 KR 20080104314**

(71) Applicant: **Pantech Co., Ltd.**
**Seoul 121-270 (KR)**

(72) Inventors:
• **Sung, Dan Keun**
**305-707, Daejeon (KR)**
• **Jung, Bang Chul**
**110-033, Seoul (KR)**
• **Hu, Jin**
**305-701, Yuseong-gu (KR)**
• **Hwang, Ho Young**
**133-070, Seoul (KR)**

(74) Representative: **Herzog, Markus**
**Weickmann & Weickmann**
**Patentanwälte**
**Postfach 86 08 20**
**81635 München (DE)**

(54) **Apparatus and method for determining contention window size in multi user mimo based wireless LAN system**

(57) A Multiple-Input Multiple-Output data transmission system includes access stations and an access point having multiple receive antennas. An access point has a minimum contention window size decision unit to determine a minimum contention window size based on the number of receive antennas and a number of access stations, a broadcasting unit to broadcast the determined minimum contention window size to the access stations, and a receiver to receive data from the access stations in a contention window that is calculated based on the minimum contention window size. An access station receives the minimum contention window size from the access point, determines a first contention window size based on the minimum contention window size, and transmits data to the access point within the first contention window. If the transmission fails, the access station determines a second contention window size and retransmits the data in the second contention window.

FIG. 1

**Description**

BACKGROUND OF THE INVENTION

FIELD OF THE INVENTION

The present invention relates to a Multiple Input Multiple Output (MIMO) data transmission system, and more particularly, to an apparatus and method for setting a contention window size, during which a station may transmit data.

DISCUSSION OF THE BACKGROUND

In a Multiple Input Multiple Output (MEMO) based wireless local area network (WLAN) system, there may be a data collision problem occurring if more than one station transmits data to an access point at a particular time.

A WLAN system is a local area network where at least some nodes of the network are connected without using a cable. The WLAN may avoid the cost of setting up a cable-based network, and may also provide users with the convenience of a network access environment, while maintaining the simple implementation and expandability of a wired LAN.

Various types of portable devices such as a portable digital assistant (PDA), a portable media player (PMP), a tablet PC, and the like are currently being used. Also, many users desire an ability to connect to a network with the portable devices. Therefore, there is an increasing interest regarding the WLAN.

An IEEE 802.11n version, which is still in the standardization process, may adopt a system configuration based on a MIMO communication scheme to support a higher data transmission rate in a physical layer. The MIMO communication scheme is a scheme in which a transmission end may transmit data via multiple paths using multiple transmit antennas, and a reception end may receive data via multiple paths using multiple receive antennas. Through this, the MIMO communication scheme may enhance a data transmission rate and may reduce interference in a multi-path environment.

In the IEEE 802.11n WLAN, a station and an access point may each include multiple antennas. Through this configuration, the IEEE 802.11n WLAN may support an enhanced data transmission rate in a physical layer in comparison to existing versions. However, even if performance is enhanced in the physical layer, there may be some constraints on improving the data transmission throughput due to a limit of a Media Access Control (MAC) layer protocol.

Accordingly, there is a need for a new technology that may reduce the risk of data collision by applying a MIMO technology to a MAC layer.

SUMMARY OF THE INVENTION

Exemplary embodiments of the present invention provide an access point that can determine a minimum contention window size based on a number of receive antennas and a number of access stations accessing the access point, and can receive data transmitted from access stations in a contention window that is calculated based on the minimum contention window size. Exemplary embodiments of the present invention also provide a method for receiving data at the access point.

Exemplary embodiments of the present invention also provide an access point that can determine a maximum number of data retransmissions based on a number of receive antennas and a number of access stations accessing the access point, and can receive data transmitted from the access stations based on the maximum number of data retransmissions. Exemplary embodiments of the present invention also provide a method for receiving data at the access point.

Additional aspects of the invention will be set forth in the description which follows, and in part will be apparent from the description, or may be learned by practice of the invention.

An exemplary embodiment of the present invention discloses an access point including a plurality of receive antennas, a minimum contention window size decision unit to determine a minimum contention window size based on a number of the receive antennas and a number of access stations accessing the access point; a broadcasting unit to broadcast the determined minimum contention window size to the access stations; and a receiver to receive data transmitted from the access stations in a contention window that is calculated based on the minimum contention window size.

An exemplary embodiment of the present invention discloses a station including a receiver to receive a minimum contention window size from an access point; a contention window size decision unit to determine a first contention window size based on the minimum contention window size; and a transmitter to transmit data to the access point at a first time within the first contention window. If a transmission of the data fails, the contention window size decision unit may determine a second contention window size that is greater than the first contention window size, and the transmitter retransmits the data to the access point at a second time within the second contention window.

An exemplary embodiment of the present invention discloses an access point including a plurality of receive antennas, a control unit to determine a maximum number of data retransmissions based on a number of the receive antennas and a number of access stations accessing the access point, a broadcasting unit to broadcast the determined maximum number of data retransmissions to the access stations, and a receiver to receive data transmitted from the access stations based on the maximum number of data retransmissions.

An exemplary embodiment of the present invention discloses a method for receiving data at an access point comprising a plurality of receive antennas. The method includes determining a minimum contention window size based on a number of the receive antennas and a number of access stations accessing the access point, broadcasting the determined minimum contention window size to the access stations, and receiving data transmitted from the access stations in a contention window that is calculated based on the minimum contention window size.

It is to be understood that both the foregoing general description and the following detailed description are exemplary and explanatory and are intended to provide further explanation of the invention as claimed.

BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the aspects of the invention.

FIG. 1 illustrates an operation of a station to transmit data to an access point within a contention window that is calculated based on a minimum contention window size according to an exemplary embodiment of the present invention.

FIG. 2 is a block diagram illustrating a structure of an access point according to an exemplary embodiment of the present invention.

FIG. 3 is a block diagram illustrating a structure of a station according to an exemplary embodiment of the present invention.

FIG. 4 is a block diagram illustrating a structure of an access point according to an exemplary embodiment of the present invention.

FIG. 5 is a flowchart illustrating a method for receiving data according to an exemplary embodiment of the present invention.

DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough, and will fully convey the scope of the invention to those skilled in the art. Like reference numerals in the drawings denote like elements.

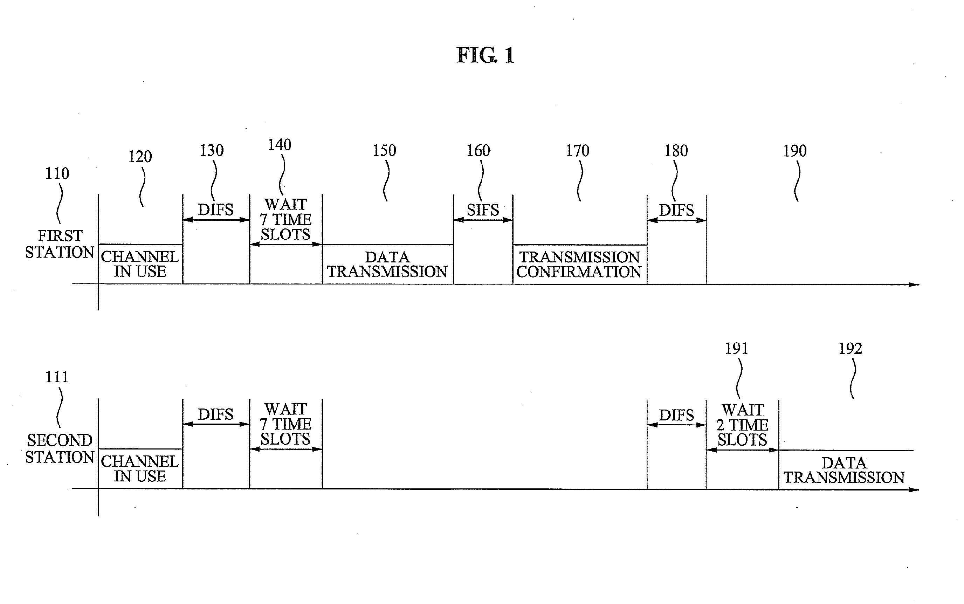

FIG. 1 illustrates an operation of a station to transmit data to an access point within a contention window that is calculated based on a minimum contention window size according to an exemplary embodiment of the present invention. Hereinafter, the operation of the station according to an exemplary embodiment of the present invention will be described in more detail with reference to FIG. 1.

Referring to FIG. 1, a first station 110 and a second station 111 may sense subcarriers to determine whether a frequency band that is used by the first station 110 and the second station 111 is being used by another station. Hereinafter, the frequency band used by the first station 110 and the second station 111 is referred to as a "channel." Also, it is assumed that the first station 110, the second third station 111, and a third station (not shown) use the same channel. As shown in FIG. 1, the first station 110 and the second station 120 do not transmit data using the channel in a first time interval 120. This may be because the third station is transmitting data using the channel in the first time interval 120.

The first station 110 and the second station 111 wait in a Distributed Coordination Function (DCF) inter-frame space (DIFS) 130 following the first time interval 120.

The first station 110 and the second station 111 may receive a minimum contention window size from an access point (not shown in FIG. 1). The first station 110 and the second station 111 may calculate a contention window size based on the minimum contention window size. For example, the first station 110 and the second station 111 may calculate the contention window size to be the minimum contention window size.

The first station 110 or the second station 111 may transmit data in a second time interval, which includes a wait time duration 140, a transmission time duration 150, a short-inter-frame space (SIFS) time duration 160, and a reception time duration 170. The first station 110 and the second station 111 may each generate a random number so that a point in time corresponding to the random number may be selected for data transmission within a contention window. Specifically, the first station 110 and the second station 111 may generate the random number according to a size of the contention window. The first station 110 and the second station 111 may determine a point in time to transmit data to the access point based on the generated random number.

The first station 110 and the second station 111 may decrease a value of the generated random number over time. For example, in FIG. 1, the first station 110 generates "7" and the second station 111 generates "9" as the random numbers. The first station 110 and the second station 111 may decrease a value of the generated random number by one per time slot that passes.

In more detail, the first station 110 and the second station 111 may determine whether the channel is being used. If the channel is not being used, the first station 110 and the second station 111 may each decrease a value of their respective generated random number by one.

For example, the first station 110 may generate "7" as the random number and transmit data after a seventh time slot from a starting point in time of the second time interval, which includes the wait time duration 140, the transmission time duration 150, the SIFS time duration 160, and the reception time duration 170. Specifically, the first station 110 may transmit data from a starting point in time of an eight time slot, after the generated random number is decreased to "0".

The second station 111 may generate "9" as the random number and continuously decrease a value of the random number until the seventh time slot, at a time when the channel is not being used by the first station 110. Since the first station 110 occupies the channel from the starting point in time of the eight time slot to transmit data, the second station 111 may not decrease the value of the random number from the starting point in time of the eight time slot. Thus, the value of the random number of the second station 111 may be maintained at "2".

The first station 110 may transmit data in the transmission time duration 150, wait in the SIFS time duration 160, and receive a transmission confirm message with respect to the transmitted data in the reception time duration 170. If the data transmission fails, the first station 110 may not receive the transmission confirm message in the reception time duration 170. In this case, the station 110 may retransmit data in a third time interval 190.

Hereinafter, it is assumed that the data transmission of the first station 110 is successful. If the data transmission of the first station 110 succeeds, the first station 110 may determine the contention window size to be the minimum contention window size.

The first station 110 and the second station 111 may wait in a DIFS 180 following the second time interval, which includes the wait time duration 140, the transmission time duration 150, the SIFS time duration 160, and the reception time duration 170.

The second station 111 may determine whether the channel is being used from a starting point in time of the third time interval 190. If the channel is not used for a data transmission, the second station 111 may decrease the value of the random number by one per time slot. In the example presented above, the value of the random number generated by the second station 111 at the starting point in time of the third time interval 190 is '2'. Therefore, the second station 111 may decrease the value of the random number until the value is decreased to "0" in a second time slot 191 of the third time interval 190, and the second station 11 then transmits data to the access point beginning in a third time slot 192 of the third time interval 190.

Thus, the first station 110 may transmit data in the second time interval, which includes the wait time duration 140, the transmission time duration 150, the SIFS time duration 160, and the reception time duration 170. The second station 111 may transmit data in the third time interval 190. However, the first station 110 and the second station 111 may transmit data in the same time interval, such as if the random number generated by the first station 110 and the random number generated by the second station 111 are the same. In this case, a data collision may occur and the access point may not successfully receive the transmitted data.

If the second station 111 succeeds in transmitting the data in the third time slot 192 of the third time interval 190, the second station 111 may determine the contention window size to be the minimum contention window size and transmit subsequent data based on the contention window size.

Conversely, if the second station 111 fails to transmit the data in the third time slot 192 of the third time interval 190, the second station 111 may increase the contention window size and retransmit the failed data to the access point based on the increased contention window size.

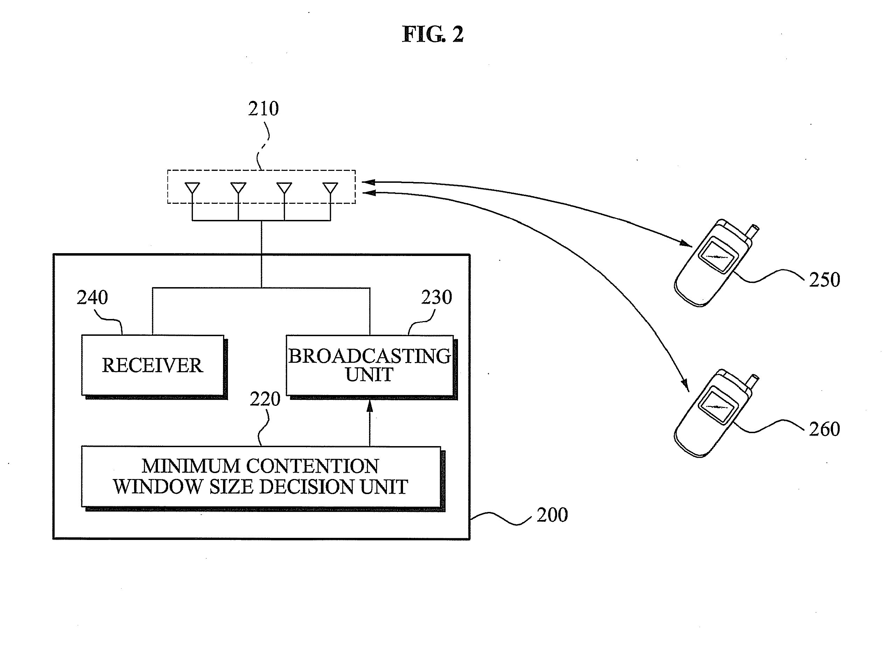

FIG. 2 is a block diagram illustrating a structure of an access point according to an exemplary embodiment of the present invention. Hereinafter, an operation of the access point will be described in more detail with reference to FIG. 2.

Referring to FIG. 2, an access point 200 may include multiple receive antennas 210, a minimum contention window size decision unit 220, a broadcasting unit 230, and a receiver 240.

The minimum contention window size decision unit 220 may determine a minimum contention window size based on a number of the receive antennas 210 and a number of access stations accessing the access point 200. In FIG. 2, two access stations 250 and 260 are shown. However, there may be fewer or more access stations accessing the access point 200. Here, the minimum contention window size decision unit 220 may determine the minimum contention window size to be in proportion to the number of access stations accessing the access point 200 and in inverse proportion to the number of receive antennas 210 of the access point 200.

If a number of access stations is large, a collision probability between data transmitted by the access stations may also be large. If the number of access stations is large, the minimum content window size decision unit 220 may determine a minimum contention window size to be a large value, which may decrease the data collision probability. If the data collision probability decreases, a data transmission throughput of a multi-user Multiple Input Multiple Output (MIMO) system including an access point and the access stations may be enhanced.

Also, if a number of receive antennas is large, an access point 200 may receive data transmitted from multiple access stations or from multiple antennas on the access stations. Specifically, if a number of access stations transmitting data is less than the number of receive antennas, the access point may be more likely to successfully receive all the data transmitted from those access stations. Therefore, even if the minimum contention window size is smaller, a collision probability between the data transmitted by the access stations may be lower if the number of receive antennas is large. Therefore, the minimum contention window size decision unit 220 may determine the minimum contention window size to be in inverse proportion to the number of receive antennas.

The minimum contention window size decision unit 220 may determine the minimum contention window size by further considering a maximum number of data retransmissions and a maximum contention window size. If data transmitted by multiple access stations collide with each other, the access stations may retransmit the collided data. The retransmission of the collided data may be limited according to a maximum number of retransmissions.

If the maximum number of retransmissions is large, the collided data may be iteratively retransmitted. As the data retransmission is iterated, a corresponding contention window may increase based on the minimum contention window size. Since the same data may be retransmitted more than once, a number of data retransmissions by the access stations may also increase. Accordingly, a probability that data retransmitted by a first access station may collide with data retransmitted or initially transmitted by a second access station may increase. Thus, the minimum contention window size decision unit 220 may determine the minimum contention window size by considering the maximum number of data retransmissions.

As described above, if the data retransmission is iterated, the contention window may increase based on the minimum contention window size. As the retransmission is iterated, the contention window may increase by multiples or exponential increases of the minimum contention window size. For example, as the retransmission is iterated, the contention window may increase by two-fold, then three-fold, or may increase by two-fold, then four-fold, for example. The increase may be limited, however, by a maximum contention window size.

If a data transmission fails, access stations may increase a contention window size. Here, a contention window size may be limited according to a maximum contention window size. The contention window size may affect a collision probability between data transmitted by the access stations. Accordingly, if the maximum contention window size is set, the minimum contention window size decision unit 220 may determine the minimum contention window size by considering the maximum contention window size.

Referring again to FIG. 2, the broadcasting unit 230 may broadcast the minimum contention window size determined by the minimum contention window size decision unit 220 to the access stations 250 and 260.

The access stations 250 and 260 may calculate a contention window size based on a minimum contention window size. The access stations 250 and 260 may receive the same minimum contention window size, or may calculate a different contention window size.

Referring again to FIG. 2, the access stations 250 and 260 may transmit data to the access point 200 at a point in time within the contention window. The receiver 240 may receive the data transmitted from the access stations 250 and 260.

If a number of retransmissions is limited, the minimum contention window size decision unit 220 may determine the minimum contention window size according to the following Equation 1:

[Equation 1]

$$ CW_{\min} = \left( \frac{2 \cdot n}{x} - 1 \right) \cdot \left( \frac{(1 - 2 \cdot p) \cdot \left(1 + p^{R+1}\right)}{p \cdot \left[1 - (2 \cdot p)^m\right] + (1 - 2 \cdot p) \cdot \left(1 - 2^m \cdot p^{R+1}\right)} \right) - 1, $$

where $CW_{\min}$ is the minimum contention window size, n is the number of access stations accessing the access point, x is a number of access stations transmitting data in a same time interval, and R is a maximum number of data retransmissions. Further, m is determined according to the following Equation 2, and p is determined according to the following Equation 3:

[Equation 2]

$$m = \log_2\left(\frac{CW_{min}+1}{CW_{max}+1}\right),$$

where $CW_{max}$ is a maximum contention window size.

[Equation 3]

$$p = 1 - \frac{1}{x} \cdot e^{-x} \cdot \sum_{i=1}^{N} \frac{1}{(i-1)!} \cdot x^i$$

where N is the number of receive antennas of the access point.

In the above Equation 1, x is the number of access stations transmitting data in a same time interval. This value x may be determined based on a probability that each transmitting station may transmit data in a particular time interval, and a number of access stations accessing a particular access point. The probability that each transmitting station may transmit the data in a particular time interval may vary according to an environment.

The number of access stations to transmit data in the same time interval, that is, x may be estimated according to the number of receive antennas of the access point. Specifically, the access point may set the number of access stations to transmit data in the same time interval according to the following Table 1:

[Table 1]

| N | x |
|---|---|
| 1 | 0.15~0.287 |
| 2 | 0.81~0.92 |
| 3 | 1.77~1.81 |
| 4 | 2.65~2.67 |

As explained above, the minimum contention window size decision unit 220 may determine the minimum contention window size according to Equation 1 if a number of retransmissions is limited. However, if a number of retransmissions is not limited, the minimum contention window size decision unit 220 may determine the minimum contention window size according to the following Equation 4:

[Equation 4]

$$CW_{min} = \left(\frac{2 \cdot n}{x} - 1\right) \cdot \left(\frac{(1 - 2 \cdot p)}{p \cdot \left[1 - (2 \cdot p)^m\right] + (1 - 2 \cdot p)}\right) - 1,$$

where $CW_{min}$ is the minimum contention window size, n is the number of access stations accessing the access point, and x is a number of access stations transmitting data in a same time interval. Further, m is determined according to the following Equation 5, and p is determined according to the following Equation 6:

[Equation 5]

$$m = \log_2\left(\frac{CW_{min}+1}{CW_{max}+1}\right),$$

where $CW_{max}$ is a maximum contention window size.

[Equation 6]

$$p = 1 - \frac{1}{x} \cdot e^{-x} \cdot \sum_{i=1}^{N} \frac{1}{(i-1)!} \cdot x^i$$

where N is the number of receive antennas of the access point.

A number of access stations accessing an access point may vary over time. For example, an access station accessing a first access point may be handed over to a second access pointer. Similarly, a station accessing the second access point may be handed over to the first access point. Also, a station positioned within a coverage area of the first access point may be powered on and access the wireless network through the access point.

The minimum contention window size decision unit 220 may consider the number of access stations varying over time to thereby determine the minimum contention window size.

The minimum contention window size decision unit 220 may update a number of access stations based on a transmission success probability of data transmitted by the access stations and a collision probability of the data. As the number of access stations accessing an access point increases, a probability that the access stations transmit data in the same time interval may also increase. If the access stations transmit data in the same time interval, the transmitted data may collide with each other, causing a transmission failure of the data.

Accordingly, if the transmission success probability of the data decreases, or if the data collision probability increases, the minimum contention window size decision unit 220 may determine that the number of access stations accessing the access point has increased.

Conversely, if the transmission success probability of the data increases, or if the data collision probability decreases, the minimum contention window size decision unit 220 may determine that the number of access stations accessing the access point has decreased.

The minimum contention window size decision unit 220 may determine that an access station that has not transmitted data for at least a predetermined period of time has canceled the access. The minimum contention window size decision unit 220 may update the number of access stations by disregarding access stations that may have canceled the access due to inactivity.

Further, a first access station may transmit data at a higher data transmission rate whereas a second access station may transmit data at a lower data transmission rate. If many access stations transmit data at the lower data transmission rate, the minimum contention window size decision unit 220 may determine the minimum contention window size by considering the data transmission rate of the access stations.

For example, the minimum contention window size decision unit 220 may consider the affect of an access station transmitting data at a lower data transmission rate by using $\alpha \cdot n$ Equation 1 and Equation 4 instead of n. Here, $\alpha$ is a real number greater than '0' and less than '1'.

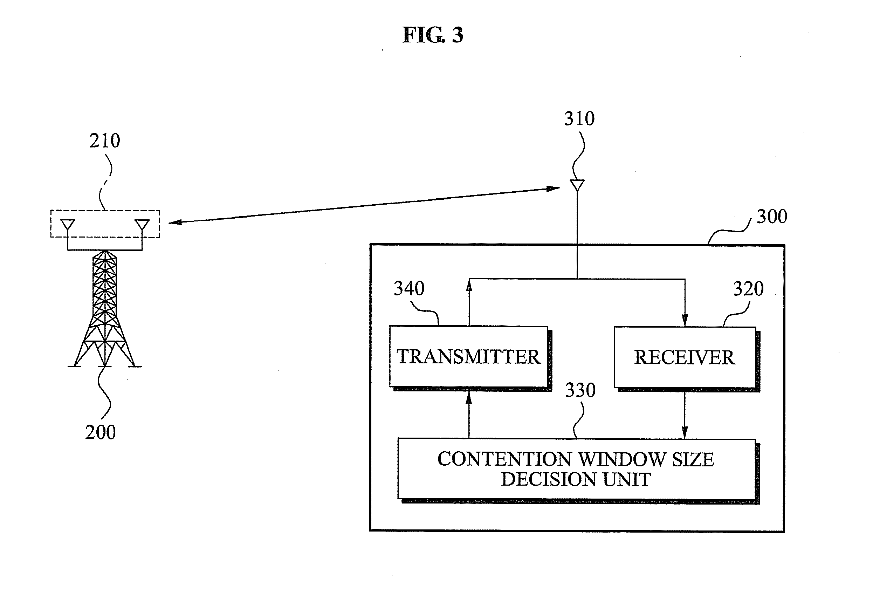

FIG. 3 is a block diagram illustrating a structure of a station according to an exemplary embodiment of the present invention. Hereinafter, an operation of a station will be described in detail with reference to FIG. 3.

Referring to FIG. 3, a station 300 may include a receiver 320, a contention window size decision unit 330, and a transmitter 340. The station 300 may also include an antenna 310, or may include more than one antenna (not shown).

The receiver 320 may receive a minimum contention window size from an access point 200. Here, the minimum contention window size may be determined based on at least a number of receive antennas 210 of the access point 200.

The contention window size decision unit 330 may determine a first contention window size based on the minimum contention window size. The contention window size decision unit 330 may determine the first contention window size to be a multiple of the minimum contention window size, such as larger by two times, three times, four times or more.

The transmitter 340 may transmit data to the access point 200 at a point in time within the first contention window. As described above with reference to FIG. 1, the transmitter 340 may generate a random number and transmit data to the access point 200 at a point in time within a first contention window that is determined based on the generated random number.

Additionally, data transmitted from the transmitter 340 may not be successfully received at the access point 200. If the data transmission fails, the contention window size decision unit 330 may determine a second contention window size that is greater than the first contention window size. The contention window size decision unit 330 may determine the second contention window size to be at least a minimum multiple of the minimum contention window size.

Then, the transmitter 340 may retransmit data to the access point 200 at a point in time within the second contention window. The second contention window size may be greater than the first contention window size. Therefore, if the transmitter 340 retransmits the data in the second contention window, a probability that the retransmitted data will collide with other transmitted data may decrease.

The transmitter 340 that succeeds in retransmitting data may transmit additional data to the access point 200 at a point in time within the second contention window.

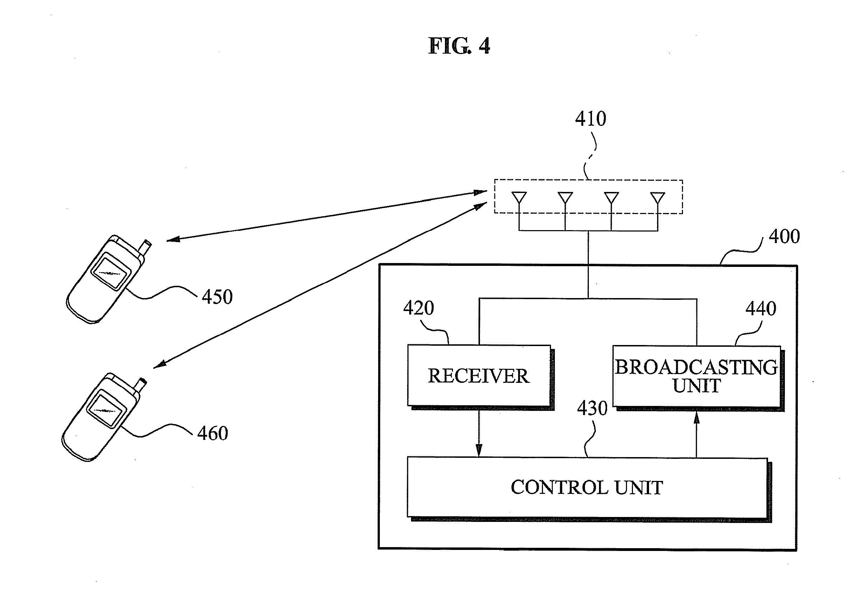

FIG. 4 is a block diagram illustrating a structure of an access point according to an exemplary embodiment of the present invention. Hereinafter, an operation of the access point will be described in detail with reference to FIG. 4.

Referring to FIG. 4, the access point 400 may include a receiver 420, a control unit 430, and a broadcasting unit 440. The access point 400 may also include multiple receive antennas 410.

The control unit 430 may determine a maximum number of data retransmissions based on a number of receive antennas 410 and a number of access stations accessing the access point 400. As shown in FIG. 4, the access stations accessing the access point 400 are labeled as 450 and 460. However, there may be fewer or more access stations accessing the access point 400.

The control unit 430 may determine the maximum number of data retransmissions to be in proportion to the number of access stations 450 and 460 accessing the access point 400.

If the number of access stations 450 and 460 increases or is larger, a data collision probability may be higher. Therefore, as the number of access stations 450 and 460 increases, the control unit 430 may set the maximum number of data retransmissions to be a larger value.

The control unit 430 may determine the maximum number of data retransmissions to be in inverse proportion to the number of receive antennas 410. If the number of receive antennas 410 is larger, it may be possible to simultaneously receive a greater amount of data. Also, the data collision probability may decrease. As the number of receive antennas 410 increases, the control unit 430 may set the maximum number of data retransmissions to be a smaller value.

The broadcasting unit 440 may broadcast the determined maximum number of data retransmissions to the access stations 450 and 460 accessing the access point 400.

The receiver 420 may receive data transmitted from the access stations 450 and 460 accessing the access point 400 based on the maximum number of data retransmissions.

If the receiver 420 successfully receives data transmitted by one or more access stations, the broadcasting unit 440 may transmit a reception confirmation message about the received data to the access stations transmitting the successfully received data. The access stations may receive the reception confirmation message and determine that the data transmission is a success. If the access stations do not receive the reception confirmation message, the access stations may determine that the data transmission is a failure, and then retransmit data to the access point 400. The maximum number of data retransmissions may limit the number of times that the access stations are permitted to retransmit failed data to the access point 400.

The control unit 430 may update a number of access stations based on a transmission success probability of data transmitted by the access stations or a collision probability of the data according to the relationship described above.

If the transmission success probability of the data transmitted by the access stations decreases, or if the data collision probability increases, the control unit 430 may determine that the number of access stations accessing the access point 400 has increased.

Conversely, if the transmission success probability of the data transmitted by the access stations increases, or if the data collision probability decreases, the control unit 430 may determine that the number of access stations accessing the access point 400 has decreased.

The control unit 430 may determine that an access station that has not transmitted data for at least a predetermined period of time has canceled an access to the access point 400. The control unit 430 may update the number of access stations by considering the access stations that have canceled the access. Specifically, the control unit 430 may disregard these access stations when determining the number of access stations accessing the access point 400.

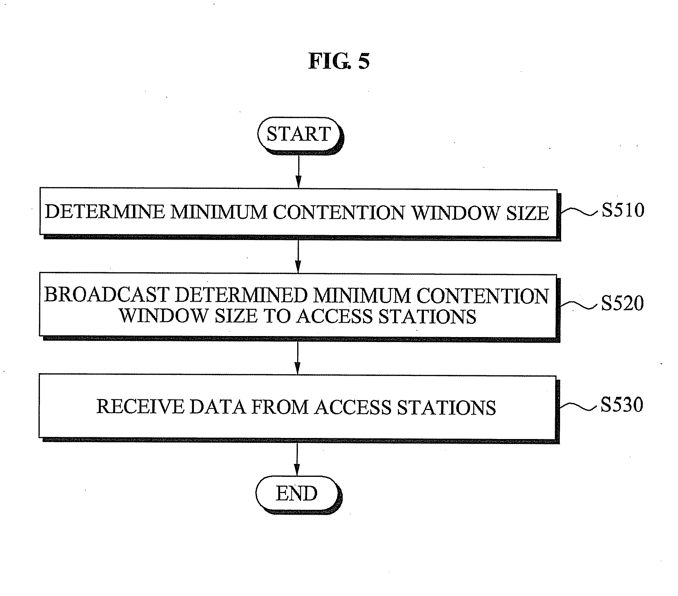

FIG. 5 is a flowchart illustrating a method for receiving data according to an exemplary embodiment of the present invention. Hereinafter, the method for receiving data will be described in more detail with reference to FIG. 5.

Referring to FIG. 5, the method for receiving data may be performed by an access point. In operation S510, the access point may determine a minimum contention window size based on a number of receive antennas and a number of access stations accessing an access point. In operation S510, the access point may determine a minimum contention window size to be in proportion to the number of access stations accessing the access point.

Additionally, as the number of access stations accessing the access point increases, the access point may determine the minimum contention window size to be a larger value in operation S510.

Further, in operation S510, the access point may determine the minimum contention window size to be in inverse proportion to the number of receive antennas. As the number of receive antennas increases, the access point may be more likely to successfully receive data transmitted from multiple access stations. In operation S510, as the number of receive antennas increases, the access point may determine the minimum contention window size to be a smaller value.

The access point may determine the minimum contention window size by considering a maximum number of data retransmissions in response to an earlier data transmission failure, in operation S510. The access stations may retransmit the failed data to the access point. The number of retransmissions may be limited according to the maximum number of retransmissions.

If the maximum number of retransmissions is a larger value, the failed data may be iteratively retransmitted. As the retransmission is iterated, a probability that the retransmitted data may collide with data transmitted by another access station may increase. In operation S510, the access point may determine the minimum contention window size by considering the maximum number of retransmissions.

The access point may determine the minimum contention window size by considering a maximum contention window size. If data transmitted by multiple access stations collide with each other, the access stations may increase a contention window and retransmit the data at a point in time within the increased contention window. A contention window size may be limited according to the maximum contention window size. The contention window size may affect a collision probability of data transmitted by the access stations. Therefore, if the contention window is set to the maximum contention window size, the access point may determine the minimum contention window size by considering the maximum contention window size in operation S510.

The access point may update a number of access stations accessing an access point based on a transmission success probability of data transmitted by the access stations, or a data collision probability. If the transmission success probability decreases, or if the data collision probability increases, the access point may determine in operation S510 that the number of access stations accessing the access point has increased.

Conversely, if the transmission success probability increases, or if the data collision probability decreases, the access point may determine in operation S510 that the number of access stations accessing the access point has decreased.

In operation S520, the access point may broadcast the determined minimum contention window size to the access stations. The access stations may calculate the contention window size based on the minimum contention window size.

In operation S530, the access point may receive data transmitted from the access stations at points in time within the calculated contention window. The access stations may generate random numbers and transmit data to the access point at points in time corresponding to those random numbers within the contention window, and the access point may receive the data transmitted from the access stations in operation S530.

The data transmission and reception method according to the above-described exemplary embodiments of the present invention may be recorded in computer-readable media including program instructions to execute various operations by a computer. The media may also include, alone or in combination with the program instructions, data files, data structures, and the like. Examples of computer-readable media include magnetic media such as hard disks, floppy disks, and magnetic tape; optical media such as CD-ROM disks and DVDs; magneto-optical media such as floptical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments of the present invention, or vice versa.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

A Multiple-Input Multiple-Output data transmission system includes access stations and an access point having multiple receive antennas. An access point has a minimum contention window size decision unit to determine a minimum contention window size based on the number of receive antennas and a number of access stations, a broadcasting unit to broadcast the determined minimum contention window size to the access stations, and a receiver to receive data from the access stations in a contention window that is calculated based on the minimum contention window size. An access station receives the minimum contention window size from the access point, determines a first contention window size based on the minimum contention window size, and transmits data to the access point within the first contention window. If the transmission fails, the access station determines a second contention window size and retransmits the data in the second contention window.

**Claims**

1. An access point, comprising:

   a plurality of receive antennas;
   a minimum contention window size decision unit to determine a minimum contention window size based on a number of the receive antennas and a number of access stations accessing the access point;
   a broadcasting unit to broadcast the determined minimum contention window size to the access stations; and
   a receiver to receive data transmitted from the access stations in a contention window that is calculated based on the minimum contention window size.

2. The access point of claim 1, wherein the minimum contention window size decision unit determines the minimum contention window size to be in proportion to the number of access stations accessing the access point and to be in inverse proportion to the number of receive antennas.

3. The access point of claim 2, wherein the minimum contention window size decision unit determines the minimum contention window size by further considering a maximum number of data retransmissions by the access stations and a maximum contention window size.

4. The access point of claim 1, wherein the minimum contention window size decision unit updates the number of access stations accessing the access point based on a transmission success probability of the data transmitted by the access stations or a collision probability of the data.

5. The access point of claim 1, wherein the minimum contention window size decision unit determines that an access station that does not transmit data for at least a predetermined time has canceled access, and updates the number of access stations accessing the access point according to the decision.

6. A station, comprising:

   a receiver to receive a minimum contention window size from an access point;
   a contention window size decision unit to determine a first contention window size based on the minimum contention window size; and
   a transmitter to transmit data to the access point at a first time within the first contention window,

   wherein if a transmission of the data fails, the contention window size decision unit determines a second contention window size that is greater than the first contention window size, and the transmitter retransmits the data to the access point at a second time within the second contention window.

7. The station of claim 6, wherein the first contention window size or the second contention window size is an integer multiple of the minimum contention window size.

8. An access point, comprising:

a plurality of receive antennas;
a control unit to determine a maximum number of data retransmissions based on a number of the receive antennas and a number of access stations accessing the access point;
a broadcasting unit to broadcast the determined maximum number of data retransmissions to the access stations; and
a receiver to receive data transmitted from the access stations based on the maximum number of data retransmissions.

9. The access point of claim 8, wherein the control unit determines the maximum number of data retransmissions to be in proportion to the number of access stations accessing the access point and in inverse proportion to the number of receive antennas.

10. The access point of claim 8, wherein the control unit updates the number of access stations accessing the access point based on a transmission success probability of the data transmitted by the access stations or a collision probability of the data.

11. The access point of claim 8, wherein the control unit determines that an access station that does not transmit data for at least a predetermined time has canceled access, and updates the number of access stations accessing the access point according to the decision.

12. A method for receiving data at an access point comprising a plurality of receive antennas, the method comprising:

determining a minimum contention window size based on a number of the receive antennas and a number of access stations accessing the access point;
broadcasting the determined minimum contention window size to the access stations; and
receiving data transmitted from the access stations in a contention window that is calculated based on the minimum contention window size.

13. The method of claim 12, wherein the minimum contention window size is determined to be in proportion to the number of access stations accessing the access point and in inverse proportion to the number of receive antennas.

14. The method of claim 13, wherein the minimum contention window size is determined by further considering a maximum number of data retransmissions and a maximum contention window size.

15. The method of claim 12, further comprising:

updating the number of access stations accessing the access point based on a transmission success probability of the data transmitted by the access stations or a collision probability of the data.

## FIG. 1

EP 2 180 751 A2

**FIG. 2**

EP 2 180 751 A2

**FIG. 3**

EP 2 180 751 A2

**FIG. 4**

EP 2 180 751 A2

# FIG. 5

START

DETERMINE MINIMUM CONTENTION WINDOW SIZE — S510

BROADCAST DETERMINED MINIMUM CONTENTION
WINDOW SIZE TO ACCESS STATIONS — S520

RECEIVE DATA FROM ACCESS STATIONS — S530

END